# EUROPEAN PATENT APPLICATION

(11) **EP 2 543 331 A1**
(43) Date of publication of application: **09.01.2013**
(21) Application number: 10846914.9
(22) Date of filing: 05.03.2010
(51) Int. Cl.: A61C 8/00, A61C 13/00

(54) **PROSTHESIS FOR DENTAL IMPLANTS**

(71) Applicant: Internacional Dental 2007, SL, 28939 Madrid (ES)
(72) Inventor: ALVAREZ GARCÍA , José, E-28220 Madrid (ES); CABANAS , George Ernest, E-28220 Madrid (ES)
(74) Representative: Urizar Anasagasti, Jesus Maria
(86) International application number: PCT/ES2010/070124
(87) International publication number: WO 2011/107627

(57) **Abstract**

The invention relates to a prosthesis for dental implants housing therein a metal structure (1) having guide holes (2); said prosthesis has in turn fixing sleeves (3) for the introduction of fixing elements. Said prosthesis is fixed by means of prosthetic pillars (4) that fit into the guide holes (2), attaching said prosthesis with the dental implants (5). The lower end of the prosthetic pillars (4) has a head (6) that abuts the guide holes (2). The invention is particularly applicable in odontology, where a prosthesis having said features is required.

## Description

### Object of the Invention

The object of the present invention patent is to present a new prosthesis for dental implants the inside of which houses a metal structure having guide holes.

Said prosthesis in turn has fixing sleeves.

Said prosthesis is joined with the dental implants which are previously implanted in the patient by means of prosthetic pillars that fit into the guide holes.

The invention is applicable both as a surgical guide and as a temporary and permanent prosthesis.

The invention is particularly applicable in odontology, where a prosthesis having said features is required.

### Background of the Invention

Up until now, several types of dental prosthesis with specific technical features have been described in the current state of the art.

In most cases, the implantologist plans the case starting from the virtual computer planning using a surgical planning computer program on DICOM files, a plastic surgical guide is generated where the implant is positioned both direction-wise and lengthwise. During surgery, the bone of the patient is drilled through the guide, the latter is removed and the implants are placed. In same day procedures, the dentist takes impressions of the exact situation of the implants and sends the prosthesis to be produced to the prosthetics laboratory which will need to have it ready to be placed into the mouth of the patient within 72 hours.

Once the prosthesis is received, the implantologist will screw it to the implants.

This prosthesis is a temporary prosthesis made of resin with individual teeth and molars on a resin base which will be replaced with a new permanent prosthesis after a period of 3 to 6 months.

Several clinical sessions with the patient as well as the use of three prosthetic elements, i.e., surgical guide, temporary prosthesis and permanent prosthesis, are necessary.

The aim of this new prosthesis for dental implants is to create a prosthesis acting both as a surgical guide and as a temporary and permanent prosthesis.

A prosthesis for dental implants like that described in the present invention patent is at no time disclosed in the state of the art.

### Description of the Invention

To overcome or, where appropriate, to eradicate all the aforementioned drawbacks, this new prosthesis for dental implants, object of the present invention patent, is presented, the inside of which implant houses a metal structure which in turn has guide holes, said prosthesis also has fixing sleeves.

Said prosthesis is joined with the dental implants which are previously implanted in the patient by means of prosthetic pillars that fit into the guide holes.

The most significant advantages provided by this new prosthesis for dental implants are:

It acts both as a surgical guide and as a temporary and permanent prosthesis.

The implant is positioned in direction and height.

It allows performing all the work in a single short clinical session with cost saving that this entails for the clinic.

It can be customized for each individual.

### Description of the Drawings

To complement the description that is being made and for the purpose of aiding to better understand the features of the invention, a set of drawings is attached as an integral part of the present description in which the following has been depicted with an illustrative and non-limiting character:

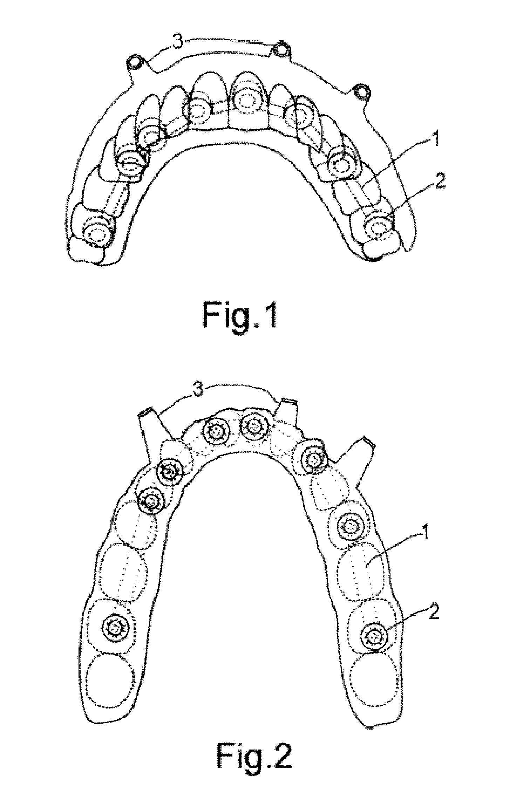

Figure 1 shows a bottom front perspective view of the prosthesis for dental implants.
   - Figure 2 shows a top view of the prosthesis for dental implants.

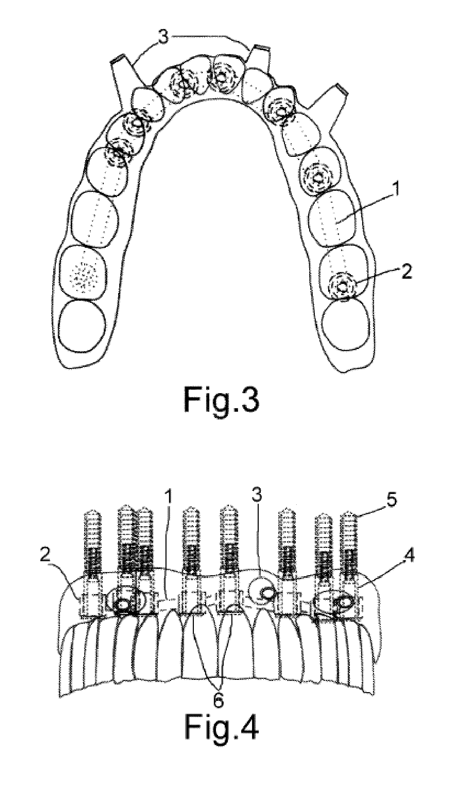

Figure 3 shows a bottom view of the prosthesis for dental implants.
Figure 4 shows a front view of the prosthesis for dental implants.

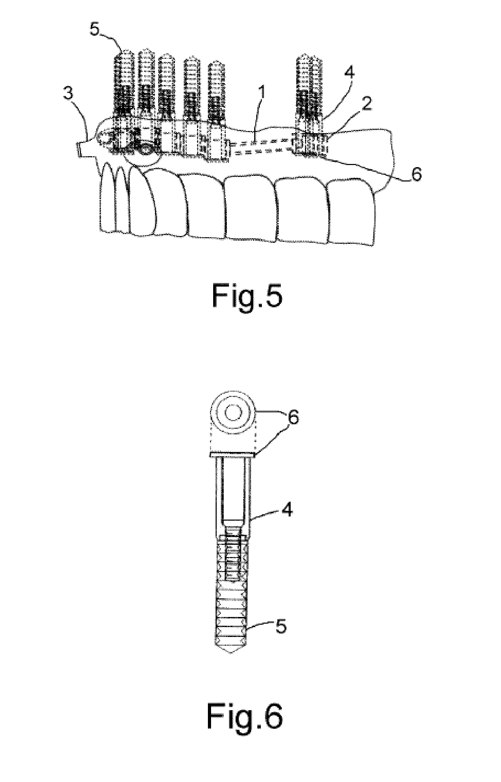

   - Figure 5 shows a side view of the prosthesis for dental implants.
Figure 6 shows detail views of the prosthetic pillar used for the implanting the prosthesis for dental implants.

### Preferred Embodiment of the Invention

The inside of this prosthesis for dental implants houses a metal structure (1) having guide holes (2), said prosthesis in turn has fixing sleeves (3) for the introduction of fixing elements.

Said prosthesis is fixed by means of prosthetic pillars (4) that fit into the guide holes (2), joining said prosthesis with the dental implants (5).

The lower end of the prosthetic pillars (4) has a head (6) that abuts the guide holes (2).

First said prosthesis is temporarily fixed to the buccal cavity of the patient by means of the fixing sleeves (3) through which a fixing element (needle, screw, etc.) is introduced, then different holes are made in the bone of the patient by means of a drill, joining said prosthesis to the buccal cavity by means of the prosthetic pillars (4), through the different guide holes (2) acting as a guide for placing several dental implants (5); a cement is then added to the outer face of the prosthetic pillar (4) for sealing the joining between the head (6) of the prosthetic pillars (4) and the guide hole (2), and the fixing sleeves (3) are removed by machining.

Having sufficiently described the nature of the present invention, it merely remains to be added that said invention may be subjected to certain variations in composition, provided that said alterations do not substantially vary the features which are claimed below.

## Claims

1. A prosthesis for dental implants, of the type implanted in the buccal cavity for providing same with tooth elements, **characterized in that** the inside of it houses a metal structure (1) having guide holes (2).

2. The prosthesis for dental implants according to claim 1, **characterized in that** it has fixing sleeves (3) for the introduction of fixing elements.

3. The prosthesis for dental implants according to claim 2, **characterized in that** said prosthesis is fixed by means of prosthetic pillars (4) that fit into the guide holes (2) joining said prosthesis with the dental implants (5).

4. The prosthesis for dental implants according to claim 3, **characterized in that** the lower end of the prosthetic pillars (4) has a head (6) that abuts the guide holes (2).
